# EUROPEAN PATENT SPECIFICATION

(11) **EP 3 932 805 B1**
(45) Date of publication and mention of the grant of the patent: **13.12.2023**
(21) Application number: 21164734.2
(22) Date of filing: 24.03.2021
(51) Int. Cl.: B64C 27/28, B64C 29/00, B64D 27/24, B64D 35/02, B64C 11/28, B64D 29/02

(54) **HYBRID PROPULSION SYSTEM FOR CONVERTIBLE AIRCRAFT**
HYBRIDANTRIEBSSYSTEM FÜR EIN SCHWENKBARES FLUGZEUG
SYSTÈME DE PROPULSION HYBRIDE POUR AÉRONEF CONVERTIBLE

(30) Priority: 29.06.2020 US 202016915002
(43) Date of publication of application: 05.01.2022
(73) Proprietor: Textron Innovations Inc., Providence, Rhode Island 02903 (US)
(72) Inventor: PARSONS, Thomas Dewey, Fort Worth, TX 76109 (US); SOBEL, James E., Haslet, Texas (US); STEINERT, Alan Hisashi, Fort Worth, TX 76137 (US); LOE, David Henderson, Hurst, TX 76054 (US)
(74) Representative: Barker Brettell LLP

(56) References cited:
- EP-A1- 3 461 742
- EP-A1- 3 466 812
- CN-A- 109 866 919
- US-A1- 2019 016 441
- US-A1- 2020 172 235

## Description

### CROSS-REFERENCE TO RELATED APPLICATIONS

Not applicable.

### STATEMENT OF FEDERALLY FUNDED RESEARCH

Not applicable.

### TECHNICAL FIELD OF THE INVENTION

The present invention relates in general to the field of aircraft, and more particularly, to a hybrid propulsion system for convertible aircraft.

### BACKGROUND OF THE INVENTION

Without limiting the scope of the invention, its background is described in connection with convertible aircraft. US 2020/172235 discloses a high-speed hybrid propulsion system for a tiltrotor aircraft including two pivotal nacelles, each nacelle comprising an electric motor coupled to a proprotor; an electric aircraft system; an electric generator; an electrical bus electrically connected to the electric generator, the electric motors, and the electric aircraft system; and a convertible turbofan engine coupled to an electric generator through a drive shaft. EP 3461742 discloses hybrid power system for a vertical takeoff and landing ("VTOL") aircraft including a first power source operable to provide a power output for at least a forward flight mode; and a second power source configured to provide a high specific power output for an altitude adjustment flight mode, the second power source including an auxiliary gas generator coupled to a turbine and a drive system. EP 3466812 discloses a tiltrotor aircraft having a vertical takeoff and landing flight mode and a forward flight mode. The tiltrotor aircraft includes a longitudinally extending fuselage with a wing extending laterally therefrom having oppositely disposed wing tips distal from the fuselage. US 2019/016441 discloses a mechanism for folding a rotor blade that is rotatably coupled to a blade cuff about a blade-fold axis between an extended position and a folded position. The mechanism includes a swash plate configured to translate relative to a mast, a pitch link rotatably coupled to the swash plate, a pitch horn rotatably coupled to the pitch link, a crank coupled to the pitch horn, and a link rotatably coupled to the crank and rotatably coupled to the rotor blade.

U.S. Patent Nos. 10,226,447 entitled "Folding Proprotor Gimbal Lock and Blade Lock Mechanism" and 10,526,068 entitled "Tiltrotor Aircraft Having Rotary and Non Rotary Flight Modes" describe mechanisms for transitioning a tiltrotor aircraft between rotary and non rotary flight modes. These mechanisms include a gimbal lock positioned about a mast that is operable to selectively enable and disable a gimballing degree of freedom of a rotor assembly relative to the mast. A blade stop assembly, positioned about the mast, includes a plurality of arms having a radially contracted orientation and a radially extended orientation. A blade lock assembly is operably associated with each rotor blade assembly. Each blade lock assembly is operable to selectively enable and disable a folding degree of freedom and a pitching degree of freedom of the respective rotor blade assembly. A swash plate is operable to change the pitch of the rotor blade assemblies in the rotary flight mode and fold the rotor blade assemblies in the non rotary flight mode.

U.S. Published Patent Application No. 2018/0251266 entitled "Hybrid Propulsion Drive Train System for Tiltrotor aircraft" describes a hybrid propulsion system for an aircraft comprising: one or more turboshaft engines that provide shaft power and are capable of providing thrust; at least one of: one or more electrical generators or one or more hydraulic pumps connected to a shaft of the one or more turboshaft engines; and at least two rotatable nacelles, each nacelle housing at least one of: one or more electric motors or one or more hydraulic motors each connected to a proprotor, wherein the electric motor is electrically connected to the electric generator, or the hydraulic motor is connected to the hydraulic pump, respectively, wherein the proprotors provide lift whenever the aircraft is in vertical takeoff and landing and hover mode, and provide thrust whenever the aircraft is in forward flight.

### SUMMARY OF THE INVENTION

Convertible aircraft require high speed forward flight as well as vertical take off and landing (VTOL) capability. Currently, turboshaft engines are ideal for VTOL operation, due to their high shaft power output at low mass flows. Currently, turbofan engines are ideal for high speed forward flight. Their use of high bypass ratios allows them to generate thrust at high speeds with good efficiency. Combining both types of engines in a single aircraft configuration allows the turboshaft engine to be used in VTOL/hover while a turbofan engine is used in high speed flight.

In one embodiment according to claim 1, a hybrid propulsion system for a tiltrotor aircraft comprises one or more engines that provide thrust whenever the tiltrotor aircraft is in a first forward flight mode, one or more electrical or hydraulic power sources, and two or more pylon assemblies. Each pylon assembly houses one or more electric or hydraulic motors connected to the one or more electrical or hydraulic power sources and a proprotor. All or part of each pylon assembly is rotatable. The one or more electric or hydraulic motors independent of the one or more engines. There are one or more electrical or hydraulic lines connecting the one or more electrical or hydraulic power sources to the one or more electrical or hydraulic motors in each pylon assembly. The proprotors provide lift whenever the tiltrotor aircraft is in a vertical takeoff and landing mode and a hover mode, and provide thrust whenever the tiltrotor aircraft is in a second forward flight mode.

The one or more electrical or hydraulic power sources are disposed within a fuselage. In one aspect, each pylon assembly is mounted proximate to an outboard portion of a wing, and one or more electrical or hydraulic lines are disposed within each wing connecting the one or more electrical or hydraulic power sources to the one or more electrical or hydraulic motors in each pylon assembly. In another aspect, the one or more engines comprise one or more first engines, and the one or more electrical sources comprise a second engine connected to one or more electric generators, or one or more batteries. In another aspect, one or more additional batteries are connected to the one or more electrical motors. In another aspect, the one or more additional batteries are disposed within the fuselage, each pylon assembly, or both the fuselage and each pylon assembly. In another aspect, the one or more additional batteries are moveable or ejectable. In another aspect, the one or more engines comprise one or more first engines, and the one or more hydraulic power sources comprise a second engine connected to one or more hydraulic pumps, or one or more batteries connected to the one or more hydraulic pumps. In another aspect, the one or more electric or hydraulic power sources include a reduction gearbox. In another aspect, the one or more engines are connected to the one or more electric or hydraulic power sources. In another aspect, a proprotor gearbox is connected between the one or more electric or hydraulic motors and each proprotor. In another aspect, each of the proprotors is a stop and fold proprotor. In another aspect, each pylon assembly further houses one or more weapons, missiles, targeting devices, lasers, countermeasures, surveillance devices, detection devices, sensors, deployable drones, or other electronic devices.

In another embodiment, a tiltrotor aircraft according to claim 2 comprises: a fuselage, one or more wings attached to the fuselage, one or more engines attached to the fuselage or the one or more wings that provide thrust whenever the tiltrotor aircraft is in a first forward flight mode, one or more electrical or hydraulic power sources disposed within the fuselage, two or more pylon assemblies, and one or more electrical or hydraulic lines disposed within the one or more wings connecting the one or more electrical or hydraulic power sources to the one or more electrical or hydraulic motors in each pylon assembly. Each pylon assembly is mounted proximate to an outboard portion of the one or more wings. Each pylon assembly houses one or more electric or hydraulic motors connected to the one or more electrical or hydraulic power sources and a proprotor. All or part of each pylon assembly is rotatable. The proprotors provide lift whenever the tiltrotor aircraft is in a vertical takeoff and landing mode and a hover mode, and provide thrust whenever the tiltrotor aircraft is in a second forward flight mode.

In one aspect, the one or more engines comprise one or more first engines, and the one or more electrical sources comprise a second engine connected to one or more electric generators, or one or more batteries. In another aspect, one or more additional batteries are connected to the one or more electrical motors. In another aspect, the one or more additional batteries are disposed within the fuselage, each pylon assembly, or both the fuselage and each pylon assembly. In another aspect, the one or more additional batteries are moveable or ejectable. In another aspect, the one or more engines comprise one or more first engines, and the one or more hydraulic power sources comprise a second engine connected to one or more hydraulic pumps, or one or more batteries connected to the one or more hydraulic pumps. In another aspect, the one or more electric or hydraulic power sources include a reduction gearbox. In another aspect, the one or more engines are connected to the one or more electric or hydraulic power sources. In another aspect, a proprotor gearbox is connected between the one or more electric or hydraulic motors and each proprotor. In another aspect, each of the proprotors is a stop and fold proprotor. In another aspect, each pylon assembly further houses one or more weapons, missiles, targeting devices, lasers, countermeasures, surveillance devices, detection devices, sensors, deployable drones, or other electronic devices.

In yet another embodiment, a method of providing propulsion to a tiltrotor aircraft according to claim 3 comprises: providing thrust from one or more engines whenever the tiltrotor aircraft is in a first forward flight mode, generating electrical or hydraulic power from one or more electrical or hydraulic power sources, driving one or more electric or hydraulic motors within two or more pylon assemblies using the electrical or hydraulic power, wherein the one or more electric or hydraulic motors are independent of the one or more engines, driving a proprotor on each pylon assembly using the one or more electric or hydraulic motors, providing lift from the proprotors whenever the tiltrotor aircraft is in a vertical takeoff and landing mode and a hover mode, transitioning to or from the vertical takeoff and landing mode or the hover mode by rotating all or part of each pylon assembly, and providing thrust from the proprotors whenever the tiltrotor aircraft is in a second forward flight mode.

The one or more electrical or hydraulic power sources are disposed with a fuselage. In one aspect, each pylon assembly is mounted proximate to an outboard portion of a wing, and one or more electrical or hydraulic lines are disposed within each wing connecting the one or more electrical or hydraulic power sources to the one or more electrical or hydraulic motors in each pylon assembly. In another aspect, the one or more engines comprise one or more first engines, and the one or more electrical sources comprise a second engine connected to one or more electric generators, or one or more batteries. In another aspect, one or more additional batteries are connected to the one or more electrical motors. In another aspect, the one or more additional batteries are disposed within the fuselage, each pylon assembly, or both the fuselage and each pylon assembly. In another aspect, the method further comprises moving or ejecting the one or more additional batteries. In another aspect, the one or more engines comprise one or more first engines, and the one or more hydraulic power sources comprise a second engine connected to one or more hydraulic pumps, or one or more batteries connected to the one or more hydraulic pumps. In another aspect, the one or more electric or hydraulic power sources include a reduction gearbox. In another aspect, the one or more engines are connected to the one or more electric or hydraulic power sources. In another aspect, a proprotor gearbox is connected between the one or more electric or hydraulic motors and each proprotor. In another aspect, the method further comprises stopping and folding each of the proprotors. In another aspect, each pylon assembly further houses one or more weapons, missiles, targeting devices, lasers, countermeasures, surveillance devices, detection devices, sensors, deployable drones, or other electronic devices.

### BRIEF DESCRIPTION OF THE DRAWINGS

For a more complete understanding of the features and advantages of the present invention, reference is now made to the detailed description of the invention along with the accompanying figures and in which:
FIG. 1A is a schematic illustration of a tiltrotor aircraft in vertical takeoff and landing or helicopter flight mode in accordance with embodiments of the present disclosure;
FIG. 1B is a schematic illustration of a tiltrotor aircraft in proprotor forward flight mode in accordance with various embodiments of the present disclosure;
FIG. 1C is a schematic illustration of a tiltrotor aircraft in transition between prop rotor forward flight mode and airplane forward flight mode in accordance with various embodiments of the present disclosure;
FIG. 1D is a schematic illustration of a tiltrotor aircraft in airplane forward flight mode in accordance with various embodiments of the present disclosure;
FIG. 2 is a block diagram of a hybrid propulsion system in accordance with various embodiments of the present disclosure;
FIGS. 3A-3C is a block diagram of a hybrid electric propulsion system in accordance with various embodiments of the present disclosure;
FIGS. 4A-4C is a block diagram of a hybrid hydraulic propulsion system in accordance with various embodiments of the present disclosure; and
FIG. 5 is a block diagram of a method 80 of providing propulsion to a tiltrotor aircraft in accordance with embodiments of the present disclosure.

### DETAILED DESCRIPTION OF THE INVENTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

Convertible aircraft require high speed forward flight as well as vertical take off and landing (VTOL) capability. Currently, turboshaft engines are ideal for VTOL operation, due to their high shaft power output at low mass flows. Currently, turbofan engines are ideal for high speed forward flight. Their use of high bypass ratios allows them to generate thrust at high speeds with good efficiency. Combining both types of engines in a single aircraft configuration allows the turboshaft engine to be used in VTOL/hover while a turbofan engine is used in high speed flight.

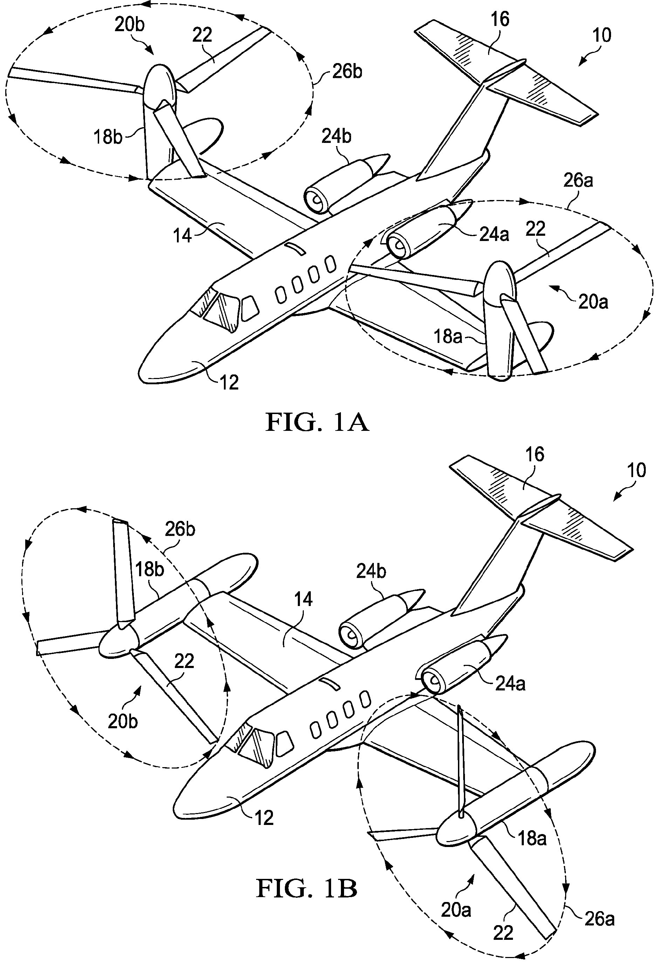

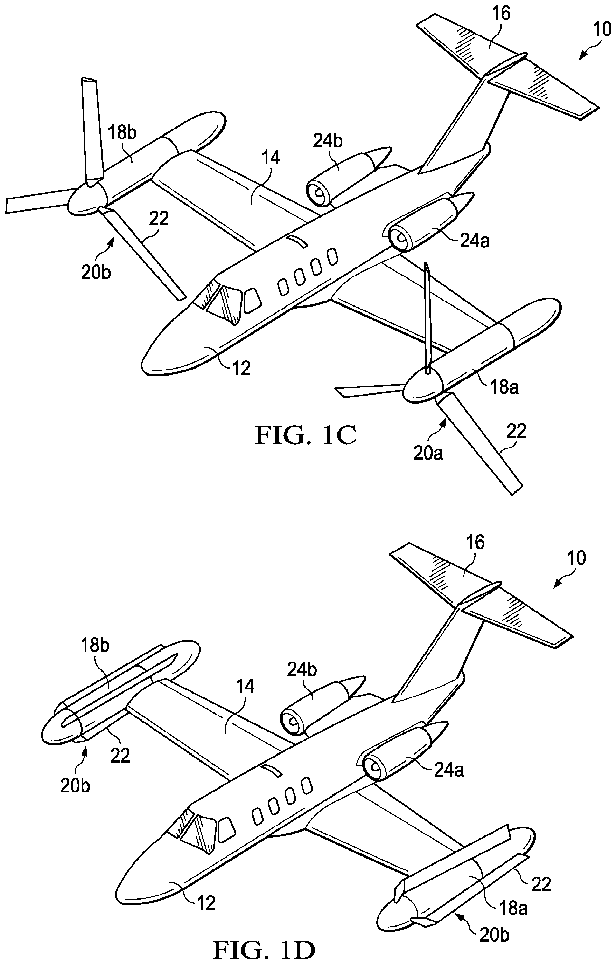

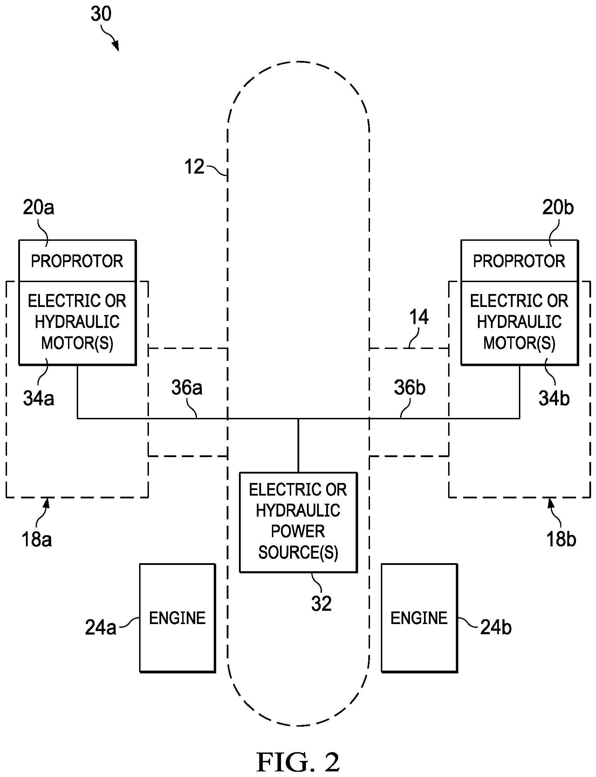

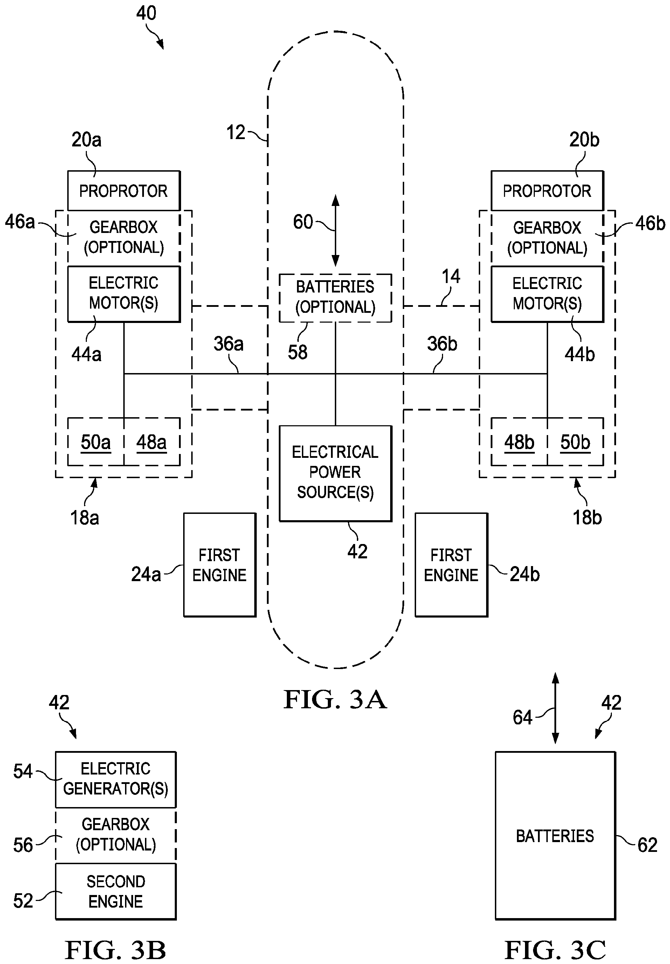

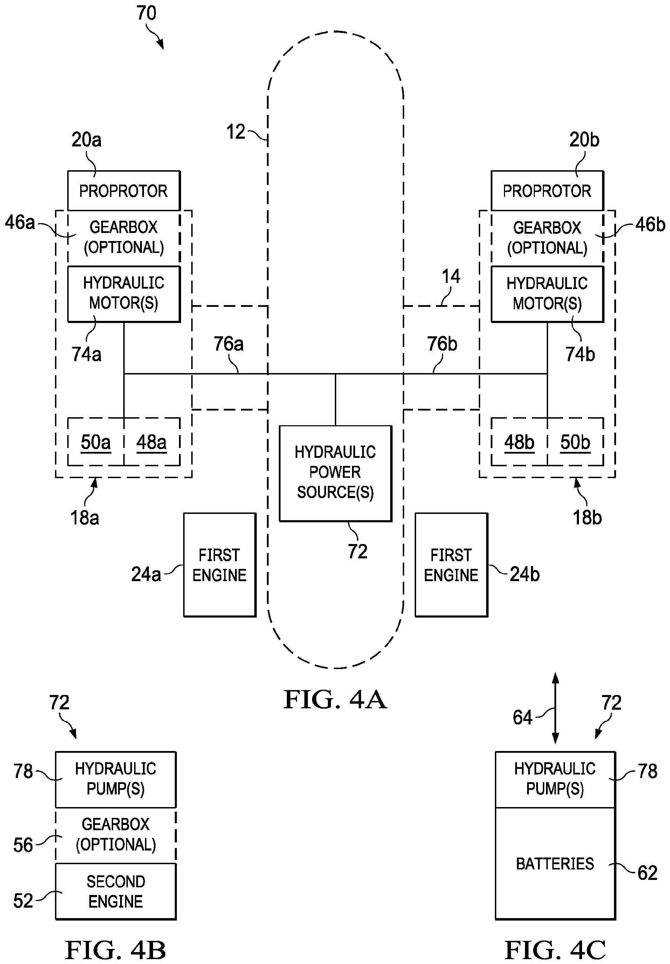

Referring to FIGS. 1A-1D in the drawings, a tiltrotor aircraft 10 is schematically illustrated in accordance with embodiments of the present disclosure. Tiltrotor aircraft 10 includes a fuselage 12, a wing 14 and a tail assembly 16 including control surfaces operable for horizontal and/or vertical stabilization during forward flight. Located proximate the outboard ends of wing 14 are pylon assemblies 18a, 18b that are rotatable relative to wing 14 between a generally vertical orientation, as best seen in FIG. 1A, and a generally horizontal orientation, as best seen in FIGS. 1B-1D. Pylon assemblies 18a, 18b each house a portion of the drive system that is used to rotate proprotor assemblies 20a, 20b, respectively. Each proprotor assembly 20a, 20b includes a plurality of proprotor blades 22 that are operable to be rotated, as best seen in FIGS. 1A-1B, operable to be feathered, as best seen in FIG. 1C and operable to be folded, as best seen in FIG. 1D. In FIGS. 1A-1B, proprotor assemblies 20a, 20b are rotated responsive to torque and rotational energy provided by an electric or hydraulic propulsion system as illustrated in FIG. 2, or an electric propulsion system as illustrated in FIGS. 3A-3C, or a hydraulic propulsion system as illustrated in FIGS. 4A-4C, or variants thereof. Engines 24a, 24b are located proximate an aft portion of fuselage 12. Engines 24a, 24b are operable in a turbofan mode as best seen in FIGS. 1C-1D.

FIG. 1A illustrates tiltrotor aircraft 10 in VTOL or helicopter flight mode, in which proprotor assemblies 20a, 20b are rotating in a substantially horizontal plane to provide a lifting thrust, such that tiltrotor aircraft 10 flies much like a conventional helicopter. In this configuration, one of the propulsion systems illustrated in FIGS. 2-4 are used to drive the respective proprotor assemblies 20a, 20b. Thus, in this configuration, tiltrotor aircraft 10 is considered to be in a rotary flight mode. FIG. 1B illustrates tiltrotor aircraft 10 in proprotor forward flight mode, in which proprotor assemblies 20a, 20b are rotating in a substantially vertical plane to provide a forward thrust enabling wing 14 to provide a lifting force responsive to forward airspeed, such that tiltrotor aircraft 10 flies much like a conventional propeller driven aircraft.

In the rotary flight mode of tiltrotor aircraft 10, proprotor assemblies 20a, 20b rotate in opposite directions to provide torque balancing to tiltrotor aircraft 10. For example, when viewed from the front of tiltrotor aircraft 10 in proprotor forward flight mode (FIG. 1B) or from the top in helicopter mode (FIG. 1A), proprotor assembly 20a rotates clockwise, as indicated by motion arrows 26a, and proprotor assembly 20b rotates counterclockwise, as indicated by motion arrows 26b. In the illustrated embodiment, proprotor assemblies 20a, 20b each include three proprotor blades 22 that are equally spaced apart circumferentially at approximately 120-degree intervals. It should be understood by those having ordinary skill in the art, however, that the proprotor assemblies of the present disclosure could have proprotor blades with other designs and other configurations including proprotor assemblies having four, five or more proprotor blades. In addition, it should be appreciated that tiltrotor aircraft 10 can be operated such that proprotor assemblies 20a, 20b are selectively positioned between proprotor forward flight mode and helicopter mode, which can be referred to as a conversion flight mode.

FIG. 1C illustrates tiltrotor aircraft 10 in transition between prop rotor forward flight mode and airplane forward flight mode, in which the propulsion systems described in FIGS. 2-4 have been disengaged from proprotor assemblies 20a, 20b and proprotor blades 22 of proprotor assemblies 20a, 20b have been feathered, or oriented to be streamlined in the direction of flight, such that proprotor blades 22 act as brakes to aerodynamically stop the rotation of proprotor assemblies 20a, 20b. In this configuration, engines 24a, 24b are operable in turbofan mode wherein hot combustion gases in each engine 24a, 24b cause rotation of a power turbine coupled to an output shaft that is used to power a turbofan that forces bypass air through a fan duct to create forward thrust enabling wing 14 to provide a lifting force responsive to forward airspeed, such that tiltrotor aircraft 10 flies much like a conventional jet aircraft. Thus, in this configuration, tiltrotor aircraft 10 is considered to be in a non-rotary flight mode. FIG. 1D illustrates tiltrotor aircraft 10 in airplane forward flight mode, in which proprotor blades 22 of proprotor assemblies 20a, 20b have been folded to be oriented substantially parallel to respective pylon assemblies 18a, 18b to minimize the drag force generated by proprotor blades 22 (also referred to as stop and fold proprotors). In this configuration, engines 24a, 24b are operable in the turbofan mode and tiltrotor aircraft 10 is considered to be in the non-rotary flight mode. The forward cruising speed of tiltrotor aircraft 10 can be significantly higher in airplane forward flight mode versus proprotor forward flight mode as the forward airspeed induced proprotor aeroelastic instability is overcome. Various embodiments of the blade folding mechanisms are described in U.S. Patent Nos. 10,226,447 entitled "Folding Proprotor Gimbal Lock and Blade Lock Mechanism" and 10,526,068 entitled "Tiltrotor Aircraft Having Rotary and Non Rotary Flight Modes", both of which are hereby incorporated by reference in their entirety. Note that other blade folding mechanisms can be used.

Even though tiltrotor aircraft 10 has been described as having two engines fixed to the fuselage each operating one of the proprotor assemblies in the rotary flight mode, it should be understood by those having ordinary skill in the art that other engine arrangements are possible and are considered to be within the scope of the present disclosure including, for example, having a single engine, three engines or more than three engines. Moreover, engines 24a, 24b are not limited to turbofan engines. In addition, even though proprotor assemblies 20a, 20b are illustrated in the context of tiltrotor aircraft 10, it should be understood by those having ordinary skill in the art that the proprotor assemblies disclosed herein can be implemented on other tiltrotor aircraft including, for example, quad tiltrotor aircraft having an additional wing member aft of wing 14, unmanned tiltrotor aircraft or other tiltrotor aircraft configurations. Furthermore, even though pylon assemblies 18a, 18b are illustrated in the context of tiltrotor aircraft 10, it should be understood by those having ordinary skill the art that the pylon assemblies disclosed herein can be implemented such that all or part of the pylon assemblies can be rotated. Note that the tiltrotor aircraft 10 can be manned or unmanned.

The propulsion systems described in FIGS. 2-4 provide many benefits over mechanical propulsion systems in which engines 24a, 24b are operated in turbofan mode to provide torque and rotational energy to proprotor assemblies 20a, 20b, or engine are mounted in or adjacent to pylon assemblies 18a, 18b. For example, the propulsion systems of FIGS. 2-4 can be independent of engines 24a, 24b such that the tiltrotor aircraft 10 can still fly during a loss of power from engines 24a, 24b or propulsion systems of FIGS. 2-4. The propulsion systems of FIGS. 2-4 can also reduce the weight and structural requirements of the fuselage and wings by removing the drive system structure (e.g., mid-wing gearbox, proprotor gearbox, interconnect drive shaft through the wings, etc.). In addition, the size of the pylon assemblies 18a, 18b can be reduced, and/or other systems (e.g., weapons, missiles, targeting devices, lasers, countermeasures, surveillance devices, detection devices, sensors, deployable drones, other electronic devices, etc.) can be added to the pylon assemblies 18a, 18b.

Now referring to FIG. 2, a block diagram of a hybrid propulsion system 30 in accordance with various embodiments of the present disclosure is shown. The hybrid propulsion system 30 comprises one or more engines 24a, 24b (also referred to herein as first engines in some embodiments) that provide thrust whenever the tiltrotor aircraft is in a first forward flight mode, one or more electrical or hydraulic power sources 32, and two or more pylon assemblies 18a, 18b. The one or more engines 24a, 24b can be turboshaft engines, internal combustion engines or other suitable engine type. The one or more electrical or hydraulic power sources 32 are disposed within the fuselage 12. In some embodiments, one or more non-propulsion systems are connected to the one or more electrical or hydraulic power sources 32. Each pylon assembly 18a, 18b is mounted proximate to an outboard portion of the wing 14. Each pylon assembly 18a, 18b houses one or more electric or hydraulic motors 34a, 34b connected to the one or more electrical or hydraulic power sources 32 and a proprotor 20a, 20b. One or more electrical or hydraulic lines 36a, 36b are disposed within each wing 14 connecting the one or more electrical or hydraulic power sources 32 to the one or more electrical or hydraulic motors 34a, 34b in each pylon assembly 18a, 18b. All or part of each pylon assembly 18a, 18b is rotatable. The proprotors 20a, 20b provide lift whenever the tiltrotor aircraft is in a vertical takeoff and landing mode (also referred to as helicopter mode, etc.) and a hover mode (also referred to has stationary flight, zero airspeed flight, etc.), and provide thrust whenever the tiltrotor aircraft is in a second forward flight mode.

Referring now to FIGS. 3A-3C, a block diagram of a hybrid electric propulsion system 40 in accordance with various embodiments of the present disclosure is shown. The hybrid electric propulsion system 40 comprises one or more first engines 24a, 24b that provide thrust whenever the tiltrotor aircraft is in a first forward flight mode, one or more electrical power sources 42, and two or more pylon assemblies 18a, 18b. The one or more first engines 24a, 24b can be turboshaft engines, internal combustion engines or other suitable engine type. The one or more electrical power sources 42 are disposed within the fuselage 12. Each pylon assembly 18a, 18b is mounted proximate to an outboard portion of the wing 14. Each pylon assembly 18a, 18b houses one or more electric motors 44a, 44b connected to the one or more electrical power sources 42 and a proprotor 20a, 20b. In some embodiments, an optional proprotor gearbox 46a, 46b is connected between the one or more electric motors 44a, 44b and each proprotor 20a, 20b. One or more electrical or hydraulic lines 36a, 36b are disposed within each wing 14 connecting the one or more electrical power sources 42 to the one or more electrical motors 44a, 44b in each pylon assembly 18a, 18b. Note that the one or more electrical or hydraulic lines 36a, 36b have advantages over mechanical interconnects because the one or more electrical or hydraulic lines 36a, 36b are lighter weight and can be placed proximate to the leading edge or aft portion of the wing 14. Moreover, the one or more electrical or hydraulic lines 36a, 36b do not have to be perfectly straight. As a result, the wing 14 can be thinner and the shape of the wing 14 is not limited compared to wings with mechanical interconnects. All or part of each pylon assembly 18a, 18b is rotatable. In some embodiments, an electric slip ring is used to maintain the electrical connection between the one or more electrical power sources 42 and the one or more electrical motors 44a, 44b, when all or part of the pylon assembly 18a, 18b rotates. The proprotors 20a, 20b provide lift whenever the tiltrotor aircraft is in a vertical takeoff and landing mode and a hover mode, and provide thrust whenever the tiltrotor aircraft is in a second forward flight mode. In some embodiments, each pylon assembly 18a, 18b further houses one or more batteries 48a, 48b connected to the one or more electric motors 44a, 44b to provide supplemental or emergency power. In addition, each pylon assembly 18a, 18b can further house one or more weapons, missiles, targeting devices, lasers, countermeasures, surveillance devices, detection devices, sensors, deployable drones, or other electronic devices 50a, 50b, which can be powered from the one or more batteries 48a, 48b, the one or more electrical power sources 42 or other power supply.

As shown in FIG. 3B, the one or more electrical power sources 42 can be a second engine 52 connected to one or more electric generators 54. In some embodiments, an optional reduction gearbox 56 is connected between the second engine 52 and the one or more electric generators 54. The second engine 52 can be a turboshaft engine, internal combustion engine or other suitable engine type. The second engine 52 can be turned off during the first flight mode, used to recharge batteries, or used to power other systems. In other embodiments, one or more additional batteries 58 are connected to the one or more electric generator(s) 54 for recharging and the one or more electric motor(s) 44a, 44b to provide supplemental or emergency power (e.g., a quick burst after autorotation prior to touchdown). In some embodiments, the one or more additional batteries 58 can be moved (shifted forward or aft as depicted by arrow 60), or removed to optimize the aircraft center of gravity for the landing gear in VTOL take off and landing, and rolling take off and landing. In addition, the placement of the one or more additional batteries 58 can be dynamically controlled by the flight control computer prior to or during flight based on mission parameters or current flight parameters. Moreover, the one or more batteries 58 can be modular to allow for easy addition or removal. Furthermore, the one or more batteries 58 can be ejected or jettisoned during emergencies (e.g., fire, etc.). Note that the one or more batteries 58 allow a smaller second engine 52 to be used. Moreover, the second engine 52 can run at its "optimum high-efficiency, high-power design point" at all times. During low-power required flight conditions, the extra second engine power available can be stored in the one or more batteries 58. Note that without the one or more batteries 58, the second engine 52 will run at a lower setting at an off-design point, with higher specific fuel consumption (SFC), etc. In some embodiments, the first engines 24a, 24b are configured to drive the one or more electric generators 54 or reduction gearbox 56 in the event the second engine 52 loses power.

As shown in FIG. 3C, the one or more electrical power sources 42 can be one or more batteries 62. In some embodiments, the one or more batteries 62 can be moved (shifted forward or aft as depicted by arrow 64), or removed to optimize the aircraft center of gravity for the landing gear in VTOL take off and landing, and rolling take off and landing. In addition, the placement of the one or more batteries 62 can be dynamically controlled by the flight control computer prior to or during flight based on mission parameters or current flight parameters. The flight control computer can also monitor and control the one or more batteries 62 in accordance with battery thermal management parameters. Moreover, the one or more batteries 62 can be modular to allow for easy addition or removal. Furthermore, the one or more batteries 62 can be ejected or jettisoned during emergencies (e.g., fire, etc.). Typically, the one or more batteries 62 are only required for a short duration of a flight (e.g., VTOL mode only), so smaller and lighter batteries can be used. The one or more batteries 62 used in FIG. 3C have some advantages over the configuration shown in FIG. 3B. For example, the one or more batteries 62 have a ballistic advantage in that they are easier to shield and provide a lower heat signature. In some embodiments, the first engines 24a, 24b are configured to drive one or more electric generators 54 or reduction gearbox 56 to recharge the one or more batteries 62 in the event the one or more batteries 62 lose power.

Now referring to FIGS. 4A-4C, a block diagram of a hybrid hydraulic propulsion system 70 in accordance with various embodiments of the present disclosure is shown. The hybrid hydraulic propulsion system 70 comprises one or more first engines 24a, 24b that provide thrust whenever the tiltrotor aircraft is in a first forward flight mode, one or more hydraulic power sources 72, and two or more pylon assemblies 18a, 18b. The one or more first engines 24a, 24b can be turboshaft engines, internal combustion engines or other suitable engine type. The one or more hydraulic power sources 72 are disposed within the fuselage 12. Each pylon assembly 18a, 18b is mounted proximate to an outboard portion of the wing 14. Each pylon assembly 18a, 18b houses one or more hydraulic motors 74a, 74b connected to the one or more hydraulic power sources 72 and a proprotor 20a, 20b. In some embodiments, an optional proprotor gearbox 46a, 46b is connected between the one or more hydraulic motors 74a, 74b and each proprotor 20a, 20b. One or more hydraulic lines 76a, 76b are disposed within each wing 14 connecting the one or more hydraulic power sources 72 to the one or more hydraulic motors 74a, 74b in each pylon assembly 18a, 18b. Note that the one or more hydraulic lines 76a, 76b have advantages over mechanical interconnects because the one or more hydraulic lines 76a, 76b are lighter weight and can be placed proximate to the leading edge or aft portion of the wing 14. Moreover, the one or more hydraulic lines 76a, 76b do not have to be perfectly straight. As a result, the wing 14 can be thinner and the shape of the wing 14 is not limited compared to wings with mechanical interconnects. All or part of each pylon assembly 18a, 18b is rotatable. In some embodiments, an hydraulic slip ring is used to maintain the hydraulic connection between the one or more hydraulic power sources 72 and the one or more hydraulic motors 74a, 74b, when all or part of the pylon assembly 18a, 18b rotates. The proprotors 20a, 20b provide lift whenever the tiltrotor aircraft is in a vertical takeoff and landing mode and a hover mode, and provide thrust whenever the tiltrotor aircraft is in a second forward flight mode. In some embodiments, each pylon assembly 18a, 18b can further house one or more weapons, missiles, targeting devices, lasers, countermeasures, surveillance devices, detection devices, sensors, deployable drones, or other electronic devices 50a, 50b, which can be powered from one or more batteries 48a, 48b, or other power supply.

As shown in FIG. 4B, the one or more hydraulic power sources 72 can be a second engine 52 connected to one or more hydraulic pumps 78. In some embodiments, an optional reduction gearbox 56 is connected between the second engine 52 and the one or more hydraulic pumps 78. The second engine 52 can be a turboshaft engine, internal combustion engine or other suitable engine type. The second engine 52 can be turned off during the first flight mode, used to recharge batteries, or used to power other systems. In some embodiments, the first engines 24a, 24b are configured to drive the one or more hydraulic pumps 78 or reduction gearbox 56 in the event the second engine 52 loses power.

As shown in FIG. 4C, the one or more hydraulic power sources 72 can be one or more batteries 62 connected to one or more hydraulic pumps 78. In some embodiments, the one or more batteries 62 can be moved (shifted forward or aft as depicted by arrow 64), or removed to optimize the aircraft center of gravity for the landing gear in VTOL take off and landing, and rolling take off and landing. In addition, the placement of the one or more batteries 62 can be dynamically controlled by the flight control computer prior to or during flight based on mission parameters or current flight parameters. The flight control computer can also monitor and control the one or more batteries 62 in accordance with battery thermal management parameters. Moreover, the one or more batteries 62 can be modular to allow for easy addition or removal. Furthermore, the one or more batteries 62 can be ejected or jettisoned during emergencies (e.g., fire, etc.). Typically, the one or more batteries 62 are only required for a short duration of a flight (e.g., VTOL mode only), so smaller and lighter batteries can be used. The one or more batteries 62 used in FIG. 4C have some advantages over the configuration shown in FIG. 4B. For example, the one or more batteries 62 have a ballistic advantage in that they are easier to shield and provide a lower heat signature. In some embodiments, the first engines 24a, 24b are configured to drive the one or more hydraulic pumps 78 or reduction gearbox 56, or recharge the one or more batteries 62 in the event the one or more batteries 62 lose power.

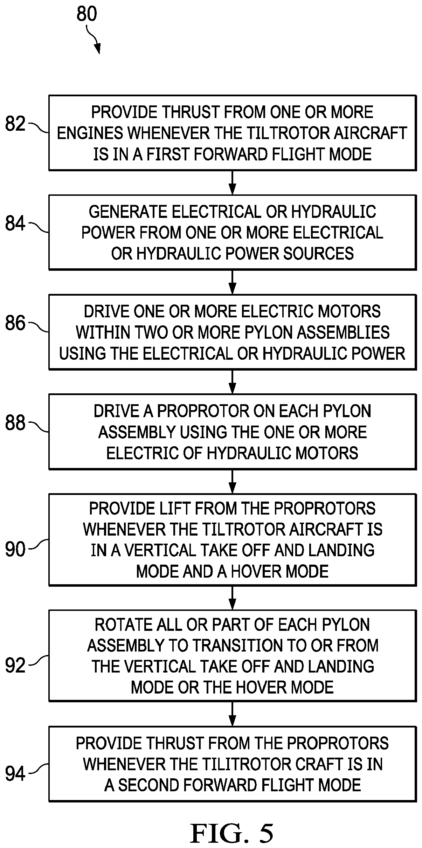

Referring now to FIG. 5, a method 80 of providing propulsion to a tiltrotor aircraft in accordance with embodiments of the present disclosure is shown. Thrust is provided from one or more engines whenever the tiltrotor aircraft is in a first forward flight mode in block 82. Electrical or hydraulic power is generated from one or more electrical or hydraulic power sources in block 84. One or more electric or hydraulic motors within two or more pylon assemblies are driven using the electrical or hydraulic power in block 86. A proprotor on each pylon assembly is driven using the one or more electric or hydraulic motors in block 88. Lift from the proprotors is provided whenever the tiltrotor aircraft is in a vertical takeoff and landing mode and a hover mode in block 90. All or part of each pylon assembly is rotated to transition to or from the vertical takeoff and landing mode or the hover mode in block 92. Thrust is provided from the proprotors whenever the tiltrotor aircraft is in a second forward flight mode in block 94.

The one or more electrical or hydraulic power sources are disposed with a fuselage. In one aspect, each pylon assembly is mounted proximate to an outboard portion of a wing, and one or more electrical or hydraulic lines are disposed within each wing connecting the one or more electrical or hydraulic power sources to the one or more electrical or hydraulic motors in each pylon assembly. In another aspect, the one or more engines comprise one or more first engines, and the one or more electrical sources comprise: a second engine connected to one or more electric generators, one or more batteries, or the second engine connected to the one or more electric generators, and the one or more batteries connected to the one or more electric generators. In another aspect, the one or more engines are connected to the one or more electric generators. In another aspect, a reduction gearbox is connected between the engines and the one or more electric or hydraulic generators. In another aspect, the method further comprises moving or ejecting the one or more batteries. In another aspect, the one or more engines comprise one or more first engines, and the one or more hydraulic power sources comprise: a second engine connected to one or more hydraulic pumps, or one or more batteries connected to the one or more hydraulic pumps. In another aspect, the one or more engines are connected to the one or more electric generators. In another aspect, a reduction gearbox is connected between the engines and the one or more electric or hydraulic generators. In another aspect, a hydraulic controller is connected to the one or more hydraulic power sources and each of the one or more hydraulic motors. In another aspect, a proprotor gearbox is connected between the one or more electric or hydraulic motors and each proprotor. In another aspect, the method further comprises stopping and folding each of the proprotors. In another aspect, each pylon assembly further houses one or more batteries connected to the one or more electric motors. In another aspect, each pylon assembly further houses one or more weapons, missiles, targeting devices, lasers, countermeasures, surveillance devices, detection devices, sensors, deployable drones, or other electronic devices. In another aspect, the tiltrotor aircraft is manned or unmanned. In another aspect, an electric slip ring electrically connects the one or more electrical generators to the one or more electrical motors in each of the pylon assemblies. In another aspect, a hydraulic swivel hydraulically connects the one or more hydraulic pumps to the one or more hydraulic motors in each of the pylon assemblies. In another aspect, the method further comprises running one or more non-propulsion systems using one or more electrical or hydraulic power sources.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of" or "consisting of". As used herein, the phrase "consisting essentially of" requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), propertie(s), method/process steps or limitation(s)) only.

The term "or combinations thereof" as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skilled in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15%.

All of the devices and/or methods disclosed and claimed herein can be made and executed without undue experimentation in light of the present disclosure.

Furthermore, no limitations are intended to the details of construction or design herein shown, other than as described in the claims below. Accordingly, the protection sought herein is as set forth in the claims below.

To aid the Patent Office, and any readers of any patent issued on this application in interpreting the claims appended hereto, applicants wish to note that they do not intend any of the appended claims to invoke paragraph 6 of 35 U.S.C. § 112 as it exists on the date of filing hereof unless the words "means for" or "step for" are explicitly used in the particular claim.

## Claims

1. A hybrid propulsion system for a tiltrotor aircraft (10) comprising:
one or more first engines (24a, 24b) configured to be attached to an aft portion of a fuselage (12) of the tiltrotor aircraft (10) that provide thrust whenever the tiltrotor aircraft (10) is in a first forward flight mode;
one or more electrical or hydraulic power sources (32, 42, 72) configured to be disposed within the fuselage (12) that are not connected to the one or more first engines (24a, 24b), wherein the one or more electrical sources comprise one or more second engines (52) connected to one or more electrical generators (54), or the one or more hydraulic sources comprise the one or more second engines (52) connected to one or more hydraulic pumps (78);
two or more pylon assemblies (18a, 18b), each pylon assembly (18a, 18b) housing one or more electric or hydraulic motors (34a, 34b) connected to the one or more electrical or hydraulic power sources (32, 42, 72) and a proprotor (20a, 20b), wherein all or part of each pylon assembly (18a, 18b) is rotatable, and the one or more electric or hydraulic motors (34a, 34b) are independent of and not connected to the one or more first engines (24a, 24b);
one or more electrical or hydraulic lines (36a, 36b) connecting the one or more electrical or hydraulic power sources (32, 42, 72) to the one or more electrical or hydraulic motors (34a, 34b) in each pylon assembly (18a, 18b); and
wherein the proprotors (20a, 20b) are configured to provide lift whenever the tiltrotor aircraft (10) is in a vertical takeoff and landing mode and a hover mode, and to provide thrust whenever the tiltrotor aircraft (10) is in a second forward flight mode.

2. A tiltrotor aircraft comprising:
A fuselage;
one or more wings (14) attached to the fuselage (12); and
a hybrid propulsion system according to claim 1, wherein the one or more first engines (24a, 24b) are attached to the fuselage (12);
wherein the one or more electrical or hydraulic power sources (32, 42, 72) are disposed within the fuselage (12);
wherein each pylon assembly (18a, 18b) is mounted proximate to an outboard portion of the one or more wings; and
wherein the one or more electrical or hydraulic lines (36a, 36b) are disposed within the one or more wings (14).

3. A method of providing propulsion to a tiltrotor aircraft (10) comprising:
providing thrust (82) from one or more first engines (24a, 24b) attached to an aft portion of a fuselage (12) of the tiltrotor aircraft (10), whenever the tiltrotor aircraft (10) is in a first forward flight mode;
generating electrical or hydraulic power (84) from one or more electrical or hydraulic power sources (32, 42, 72) disposed within the fuselage (12) that are not connected to the one or more engines (24a, 24b), wherein the one or more electrical sources comprise one or more second engines (52) connected to one or more electrical generators (54), or the one or more hydraulic sources comprise the one or more second engines (52) connected to one or more hydraulic pumps (78);
driving (86) one or more electric or hydraulic motors (34a, 34b) within two or more pylon assemblies (18a, 18b) using the electrical or hydraulic power, wherein the one or more electric or hydraulic motors (34a, 34b) are independent of and not connected to the one or more first engines (24a, 24b);
driving (88) a proprotor (20a, 20b) on each pylon assembly (18a, 18b) using the one or more electric or hydraulic motors (34a, 34b);
providing lift (90) from the proprotors (20a, 20b) whenever the tiltrotor aircraft (10) is in a vertical takeoff and landing mode and a hover mode;
transitioning (92) to or from the vertical takeoff and landing mode or the hover mode by rotating all or part of each pylon assembly (18a, 18b); and
providing thrust (94) from the proprotors (20a, 20b) whenever the tiltrotor aircraft (10) is in a second forward flight mode.

4. The method of claim 3, wherein:
each pylon assembly (18a, 18b) is mounted proximate to an outboard portion of a wing (14); and
one or more electrical or hydraulic lines (36a, 36b) are disposed within each wing (14) connecting the one or more electrical or hydraulic power sources (32, 42, 72) to the one or more electrical or hydraulic motors (34a, 34b) in each pylon assembly (18a, 18b).

5. The aircraft of claim 2, further comprising one or more additional batteries (48a, 48b, 58) connected to the one or more electrical motors (34a, 34b), wherein the one or more additional batteries (48a, 48b, 58) are disposed within the fuselage (12), each pylon assembly (18a, 18b), or both the fuselage (12) and each pylon assembly (18a, 18b); or
the method of claim 4, further comprising one or more additional batteries (48a, 48b, 58) connected to the one or more electrical motors (34a, 34b), wherein the one or more additional batteries (48a, 48b, 58) are disposed within the fuselage (12), each pylon assembly (18a, 18b), or both the fuselage (12) and each pylon assembly (18a, 18b).

6. The aircraft or method of claim 5, wherein the one or more additional batteries (58) can be moved by being shifted forward or aft or removed to optimize the aircraft center of gravity for the landing gear in VTOL take off and landing and rolling take off and landing, and wherein a placement of the one or more additional batteries (58) is dynamically controlled by a flight control computer prior to or during flight.

7. The aircraft of any of claims 2, 5 or 6, further comprising a reduction gearbox (56) connected between the one or more second engines (52) and the one or more electric generators (54) or between the one or more second engines (52) and the one or more hydraulic pumps (78); or
the method of any preceding method claim, further comprising a reduction gearbox (56) connected between the one or more second engines (52) and the one or more electric generators (54) or between the one or more second engines (52) and the one or more hydraulic pumps (78).

8. The aircraft of any of claims 2 or 5 to 7, further comprising a proprotor gearbox (46a, 46b) connected between the one or more electric or hydraulic motors (34a, 34b) and each proprotor (20a, 20b); or
the method of claim any preceding method claim, further comprising a proprotor gearbox (46a, 46b) connected between the one or more electric or hydraulic motors (34a, 34b) and each proprotor (20a, 20b).

9. The aircraft of any of claims 2 or 5 to 8, wherein each of the proprotors (20a, 20b) is a stop and fold proprotor (22); or
the method of any preceding method claim, further comprising stopping and folding each of the proprotors (20a, 20b).

10. The aircraft of any of claims 2 or 5 to 9, wherein each pylon assembly (18a, 18b) further houses one or more weapons, missiles, targeting devices, lasers, countermeasures, surveillance devices, detection devices, sensors, deployable drones, or other electronic devices (50a, 50b); or
the method of any preceding method claim, wherein each pylon assembly (18a, 18b) further houses one or more weapons, missiles, targeting devices, lasers, countermeasures, surveillance devices, detection devices, sensors, deployable drones, or other electronic devices (50a, 50b).

## Patentansprüche

1. Hybridantriebssystem für ein Kipprotorflugzeug (10), umfassend:
ein oder mehrere erste Triebwerke (24a, 24b), die so konfiguriert sind, dass sie an einem hinteren Abschnitt eines Rumpfes (12) des Kipprotorflugzeugs (10) angebracht werden können, und die immer dann Schub bereitstellen, wenn sich das Kipprotorflugzeug (10) in einem ersten Vorwärtsflugmodus befindet;
eine oder mehrere elektrische oder hydraulische Energiequellen (32, 42, 72), die so konfiguriert sind, dass sie innerhalb des Rumpfes (12) angeordnet werden, die nicht mit dem einen oder den mehreren ersten Triebwerken (24a, 24b) verbunden sind, wobei die eine oder die mehreren elektrischen Quellen ein oder mehrere zweite Triebwerke (52) umfassen, die mit einem oder mehreren elektrischen Generatoren (54) verbunden sind, oder die eine oder die mehreren hydraulischen Quellen das eine oder die mehreren zweiten Triebwerke (52) umfassen, die mit einer oder mehreren Hydraulikpumpen (78) verbunden sind;
zwei oder mehr Pylonanordnungen (18a, 18b), wobei jede Pylonanordnung (18a, 18b) einen oder mehrere elektrische oder hydraulische Motoren (34a, 34b), die mit der einen oder den mehreren elektrischen oder hydraulischen Energiequellen (32, 42, 72) verbunden sind, und einen Propeller (20a, 20b) beherbergt, wobei jede Pylonanordnung (18a, 18b) ganz oder teilweise drehbar ist und der eine oder die mehreren elektrischen oder hydraulischen Motoren (34a, 34b) unabhängig von dem einen oder den mehreren ersten Triebwerken (24a, 24b) sind und nicht mit diesen verbunden sind;
eine oder mehrere elektrische oder hydraulische Leitungen (36a, 36b), die die eine oder mehreren elektrischen oder hydraulischen Energiequellen (32, 42, 72) mit dem einen oder den mehreren elektrischen oder hydraulischen Motoren (34a, 34b) in jeder Pylonanordnung (18a, 18b) verbinden; und
wobei die Propeller (20a, 20b) so konfiguriert sind, dass sie immer dann Auftrieb bereitstellen, wenn sich das Kipprotorflugzeug (10) in einem Senkrechtstart- und Landemodus und einem Schwebemodus befindet, und dass sie immer dann Schub bereitstellen, wenn sich das Kipprotorflugzeug (10) in einem zweiten Vorwärtsflugmodus befindet.

2. Kipprotorflugzeug, umfassend:
einen Rumpf;
einen oder mehrere Flügel (14), die an dem Rumpf (12) angebracht sind; und
ein Hybridantriebssystem nach Anspruch 1, wobei das eine oder die mehreren ersten Triebwerke (24a, 24b) an dem Rumpf (12) angebracht sind;
wobei die eine oder mehreren elektrischen oder hydraulischen Energiequellen (32, 42, 72) innerhalb des Rumpfes (12) angeordnet sind;
wobei jede Pylonanordnung (18a, 18b) in der Nähe eines äußeren Abschnitts des einen oder der mehreren Flügel montiert ist; und
wobei die eine oder mehreren elektrischen oder hydraulischen Leitungen (36a, 36b) innerhalb des einen oder der mehreren Flügel (14) angeordnet sind.

3. Verfahren zum Bereitstellen von Antrieb für ein Kipprotorflugzeug (10), umfassend:
Bereitstellen von Schub (82) von einem oder mehreren ersten Triebwerken (24a, 24b), die an einem hinteren Abschnitt eines Rumpfes (12) des Kipprotorflugzeugs (10) angebracht sind, immer dann, wenn sich das Kipprotorflugzeug (10) in einem ersten Vorwärtsflugmodus befindet;
Erzeugen von elektrischer oder hydraulischer Energie (84) von einer oder mehreren elektrischen oder hydraulischen Energiequellen (32, 42, 72), die innerhalb des Rumpfes (12) angeordnet sind, die nicht mit dem einen oder den mehreren Triebwerken (24a, 24b) verbunden sind, wobei die eine oder die mehreren elektrischen Quellen ein oder mehrere zweite Triebwerke (52) umfassen, die mit einem oder mehreren elektrischen Generatoren (54) verbunden sind, oder die eine oder die mehreren hydraulischen Quellen das eine oder die mehreren zweiten Triebwerke (52) umfassen, die mit einer oder mehreren Hydraulikpumpen (78) verbunden sind;
Antreiben (86) eines oder mehrerer elektrischer oder hydraulischer Motoren (34a, 34b) innerhalb von zwei oder mehr Pylonanordnungen (18a, 18b) unter Verwendung der elektrischen oder hydraulischen Energie, wobei der eine oder die mehreren elektrischen oder hydraulischen Motoren (34a, 34b) unabhängig von dem einen oder den mehreren ersten Triebwerken (24a, 24b) sind und nicht mit diesen verbunden sind;
Antreiben (88) eines Proprotors (20a, 20b) an jeder Pylonanordnung (18a, 18b) unter Verwendung des einen oder der mehreren elektrischen oder hydraulischen Motoren (34a, 34b);
Bereitstellen von Auftrieb (90) von den Propellern (20a, 20b) immer dann, wenn sich das Kipprotorflugzeug (10) in einem Senkrechtstart- und Landemodus und in einem Schwebemodus befindet;
Übergehen (92) in den oder aus dem Senkrechtstart- und Landemodus oder dem Schwebemodus durch Drehen der gesamten oder eines Teils jeder Pylonanordnung (18a, 18b); und
Bereitstellen von Schub (94) von den Propellern (20a, 20b) immer dann, wenn sich das Kipprotorflugzeug (10) in einem zweiten Vorwärtsflugmodus befindet.

4. Verfahren nach Anspruch 3, wobei:
jede Pylonanordnung (18a, 18b) in der Nähe eines äußeren Abschnitts eines Flügels (14) montiert ist; und
eine oder mehrere elektrische oder hydraulische Leitungen (36a, 36b) in jedem Flügel (14) angeordnet sind, die die eine oder die mehreren elektrischen oder hydraulischen Energiequellen (32, 42, 72) mit dem einen oder den mehreren elektrischen oder hydraulischen Motoren (34a, 34b) in jeder Pylonanordnung (18a, 18b) verbinden.

5. Flugzeug nach Anspruch 2, weiter umfassend eine oder mehrere zusätzliche Batterien (48a, 48b, 58), die mit dem einen oder den mehreren Elektromotoren (34a, 34b) verbunden sind, wobei die eine oder die mehreren zusätzlichen Batterien (48a 48b, 58) innerhalb des Rumpfes (12), jeder Pylonanordnung (18a, 18b) oder sowohl des Rumpfes (12) als auch jeder Pylonanordnung (18a, 18b) angeordnet sind; oder
Verfahren nach Anspruch 4, weiter umfassend eine oder mehrere zusätzliche Batterien (48a, 48b, 58), die mit dem einen oder den mehreren Elektromotoren (34a, 34b) verbunden sind, wobei die eine oder die mehreren zusätzlichen Batterien (48a, 48b, 58) innerhalb des Rumpfes (12), jeder Pylonanordnung (18a, 18b) oder sowohl des Rumpfes (12) als auch jeder Pylonanordnung (18a, 18b) angeordnet sind.

6. Flugzeug oder Verfahren nach Anspruch 5, wobei die eine oder die mehreren zusätzlichen Batterien (58) bewegt werden können, indem sie nach vorne oder nach hinten verschoben oder entfernt werden, um den Schwerpunkt des Flugzeugs für das Fahrwerk bei VTOL-Start und -Landung und rollendem Start und rollender Landung zu optimieren, und wobei eine Platzierung der einen oder der mehreren zusätzlichen Batterien (58) von einem Flugsteuerungscomputer vor oder während des Flugs dynamisch gesteuert wird.

7. Flugzeug nach einem der Ansprüche 2, 5 oder 6, weiter umfassend ein Untersetzungsgetriebe (56), das zwischen dem einen oder den mehreren zweiten Triebwerken (52) und dem einen oder den mehreren elektrischen Generatoren (54) oder zwischen dem einen oder den mehreren zweiten Triebwerken (52) und der einen oder den mehreren Hydraulikpumpen (78) verbunden ist; oder
Verfahren nach einem vorstehenden Verfahrensanspruch, das weiter ein Untersetzungsgetriebe (56) umfasst, das zwischen dem einen oder den mehreren zweiten Triebwerken (52) und dem einen oder den mehreren elektrischen Generatoren (54) oder zwischen dem einen oder den mehreren zweiten Triebwerken (52) und der einen oder den mehreren Hydraulikpumpen (78) angeschlossen ist.

8. Flugzeug nach einem der Ansprüche 2 oder 5 bis 7, weiter umfassend ein Propellergetriebe (46a, 46b), das zwischen dem einen oder mehreren elektrischen oder hydraulischen Motoren (34a, 34b) und jedem Propeller (20a, 20b) verbunden ist; oder
Verfahren nach einem vorstehenden Verfahrensanspruch, weiter umfassend ein Propellergetriebe (46a, 46b), das zwischen dem einen oder den mehreren elektrischen oder hydraulischen Motoren (34a, 34b) und jedem Propeller (20a, 20b) angeschlossen ist.

9. Flugzeug nach einem der Ansprüche 2 oder 5 bis 8, wobei jeder der Propeller (20a, 20b) ein Klapppropeller (22) ist; oder
Verfahren nach einem vorstehenden Verfahrensanspruch, weiter umfassend das Anhalten und Einklappen jedes der Propeller (20a, 20b).

10. Flugzeug nach einem der Ansprüche 2 oder 5 bis 9, wobei jede Pylonanordnung (18a,
18b) weiter eine oder mehrere Waffen, Raketen, Zielvorrichtungen, Laser, Abwehrmaßnahmen, Überwachungsvorrichtungen, Erfassungsvorrichtungen, Sensoren, einsatzfähige Drohnen oder andere elektronische Vorrichtungen (50a, 50b) beherbergt; oder
Verfahren nach einem vorstehenden Verfahrensanspruch, wobei jede Pylonanordnung (18a, 18b) weiter eine oder mehrere Waffen, Raketen, Zielvorrichtungen, Laser, Abwehrmaßnahmen, Überwachungsvorrichtungen, Erfassungsvorrichtungen, Sensoren, einsetzbare Drohnen oder andere elektronische Vorrichtungen (50a, 50b) beherbergt.

## Revendications

1. Système de propulsion hybride pour un aéronef à rotors basculants (10) comprenant :
un ou plusieurs premiers moteurs (24a, 24b) configurés pour être fixés à une partie arrière d'un fuselage (12) de l'aéronef à rotors basculants (10) qui fournissent une poussée chaque fois que l'aéronef à rotors basculants (10) est dans un premier mode de vol vers l'avant ;
une ou plusieurs sources d'énergie électrique ou hydraulique (32, 42, 72) configurées pour être disposées à l'intérieur du fuselage (12) qui ne sont pas reliées aux un ou plusieurs premiers moteurs (24a, 24b), dans lequel les une ou plusieurs sources électriques comprennent un ou plusieurs seconds moteurs (52) reliés à un ou plusieurs générateurs électriques (54), ou les une ou plusieurs sources hydrauliques comprennent les un ou plusieurs seconds moteurs (52) reliés à une ou plusieurs pompes hydrauliques (78) ;
deux ensembles pylônes (18a, 18b) ou plus, chaque ensemble pylône (18a, 18b) logeant un ou plusieurs moteurs électriques ou hydrauliques (34a, 34b) reliés aux une ou plusieurs sources d'énergie électrique ou hydraulique (32, 42, 72) et un rotor orientable (20a, 20b), dans lequel tout ou partie de chaque ensemble pylône (18a, 18b) peut tourner, et les un ou plusieurs moteurs électriques ou hydrauliques (34a, 34b) sont indépendants des un ou plusieurs premiers moteurs (24a, 24b) et non reliés à ceux-ci ;
une ou plusieurs lignes électriques ou conduites hydrauliques (36a, 36b) reliant les une ou plusieurs sources d'énergie électrique ou hydraulique (32, 42, 72) aux un ou plusieurs moteurs électriques ou hydrauliques (34a, 34b) dans chaque ensemble pylône (18a, 18b) ; et
dans lequel les rotors orientables (20a, 20b) sont configurés pour fournir une portance chaque fois que l'aéronef à rotors basculants (10) est dans un mode de décollage et d'atterrissage vertical et un mode de vol stationnaire, et pour fournir une poussée chaque fois que l'aéronef à rotors basculants (10) est dans un second mode de vol vers l'avant.

2. Aéronef à rotors basculants comprenant :
un fuselage ;
une ou plusieurs ailes (14) fixées au fuselage (12) ; et
un système de propulsion hybride selon la revendication 1, dans lequel les un ou plusieurs premiers moteurs (24a, 24b) sont fixés au fuselage (12) ;
dans lequel les une ou plusieurs sources d'énergie électrique ou hydraulique (32, 42, 72) sont disposées à l'intérieur du fuselage (12) ;
dans lequel chaque ensemble pylône (18a, 18b) est monté à proximité d'une partie extérieure des une ou plusieurs ailes ; et
dans lequel les une ou plusieurs lignes électriques ou conduites hydrauliques (36a, 36b) sont disposées à l'intérieur des une ou plusieurs ailes (14).

3. Procédé pour assurer la propulsion d'un aéronef à rotors basculants (10) comprenant les étapes consistant à :
fournir une poussée (82) à partir d'un ou plusieurs premiers moteurs (24a, 24b) fixés à une partie arrière d'un fuselage (12) de l'aéronef à rotors basculants (10), chaque fois que l'aéronef à rotors basculants (10) est dans un premier mode de vol vers l'avant ;
générer de l'énergie électrique ou hydraulique (84) à partir d'une ou plusieurs sources d'énergie électrique ou hydraulique (32, 42, 72) disposées à l'intérieur du fuselage (12) qui ne sont pas reliées aux un ou plusieurs moteurs (24a, 24b), dans lequel les une ou plusieurs sources électriques comprennent un ou plusieurs seconds moteurs (52) reliés à un ou plusieurs générateurs électriques (54), ou les une ou plusieurs sources hydrauliques comprennent les un ou plusieurs seconds moteurs (52) reliés à une ou plusieurs pompes hydrauliques (78) ;
entraîner (86) un ou plusieurs moteurs électriques ou hydrauliques (34a, 34b) dans deux ensembles pylônes (18a, 18b) ou plus en utilisant l'énergie électrique ou hydraulique, dans lequel les un ou plusieurs moteurs électriques ou hydrauliques (34a, 34b) sont indépendants des un ou plusieurs premiers moteurs (24a, 24b) et non reliés à ceux-ci ;
entraîner (88) un rotor orientable (20a, 20b) sur chaque ensemble pylône (18a, 18b) en utilisant les un ou plusieurs moteurs électriques ou hydrauliques (34a, 34b) ;
fournir une portance (90) depuis les rotors orientables (20a, 20b) chaque fois que l'aéronef à rotors basculants (10) est dans un mode de décollage et d'atterrissage vertical et dans un mode de vol stationnaire ;
passer (92) au ou du mode de décollage et d'atterrissage vertical ou mode de vol stationnaire en faisant tourner tout ou partie de chaque ensemble pylône (18a, 18b) ; et
fournir une poussée (94) à partir des rotors orientables (20a, 20b) chaque fois que l'aéronef à rotors basculants (10) est dans un second mode de vol vers l'avant.

4. Procédé selon la revendication 3, dans lequel :
chaque ensemble pylône (18a, 18b) est monté à proximité d'une partie extérieure d'une aile (14) ; et
une ou plusieurs lignes électriques ou conduites hydrauliques (36a, 36b) sont disposées à l'intérieur de chaque aile (14) reliant les une ou plusieurs sources d'énergie électrique ou hydraulique (32, 42, 72) aux un ou plusieurs moteurs électriques ou hydrauliques (34a, 34b) dans chaque ensemble pylône (18a, 18b).

5. Aéronef selon la revendication 2, comprenant en outre une ou plusieurs batteries supplémentaires (48a, 48b, 58) reliées aux un ou plusieurs moteurs électriques (34a, 34b), dans lequel les une ou plusieurs batteries supplémentaires (48a, 48b, 58) sont disposées à l'intérieur du fuselage (12), de chaque ensemble pylône (18a, 18b), ou à la fois du fuselage (12) et de chaque ensemble pylône (18a, 18b) ; ou
procédé selon la revendication 4, comprenant en outre une ou plusieurs batteries supplémentaires (48a, 48b, 58) reliées aux un ou plusieurs moteurs électriques (34a, 34b), dans lequel les une ou plusieurs batteries supplémentaires (48a, 48b, 58) sont disposées à l'intérieur du fuselage (12), de chaque ensemble pylône (18a, 18b), ou à la fois du fuselage (12) et de chaque ensemble pylône (18a, 18b).

6. Aéronef ou procédé selon la revendication 5, dans lequel les une ou plusieurs batteries supplémentaires (58) peuvent être déplacées en étant décalées vers l'avant ou vers l'arrière ou retirées pour optimiser le centre de gravité de l'aéronef pour le train d'atterrissage lors du décollage et de l'atterrissage VTOL et du décollage et de l'atterrissage en roulant, et dans lequel un placement des une ou plusieurs batteries supplémentaires (58) est commandé de manière dynamique par un ordinateur de commande de vol avant ou pendant le vol.

7. Aéronef selon l'une quelconque des revendications 2, 5 ou 6, comprenant en outre un réducteur (56) relié entre les un ou plusieurs seconds moteurs (52) et les un ou plusieurs générateurs électriques (54) ou entre les un ou plusieurs seconds moteurs (52) et les une ou plusieurs pompes hydrauliques (78) ; ou
procédé selon une quelconque revendication de procédé précédente, comprenant en outre un réducteur (56) relié entre les un ou plusieurs seconds moteurs (52) et les un ou plusieurs générateurs électriques (54) ou entre les un ou plusieurs seconds moteurs (52) et les une ou plusieurs pompes hydrauliques (78).

8. Aéronef selon l'une quelconque des revendications 2 ou 5 à 7, comprenant en outre une boîte de vitesses de rotor orientable (46a, 46b) reliée entre les un ou plusieurs moteurs électriques ou hydrauliques (34a, 34b) et chaque rotor orientable (20a, 20b) ; ou
procédé selon une quelconque revendication de procédé précédente, comprenant en outre une boîte de vitesses de rotor orientable (46a, 46b) reliée entre les un ou plusieurs moteurs électriques ou hydrauliques (34a, 34b) et chaque rotor orientable (20a, 20b).

9. Aéronef selon l'une quelconque des revendications 2 ou 5 à 8, dans lequel chacun des rotors orientables (20a, 20b) est un rotor orientable d'arrêt et de rabat (22) ; ou
procédé selon une quelconque revendication de procédé précédente, comprenant en outre l'arrêt et le rabat de chacun des rotors orientables (20a, 20b).

10. Aéronef selon l'une quelconque des revendications 2 ou 5 à 9, dans lequel chaque ensemble pylône (18a,
18b) loge en outre un(e) ou plusieurs armes, missiles, dispositifs de ciblage, lasers, dispositifs de contre-mesure, dispositifs de surveillance, dispositifs de détection, capteurs, drones déployables ou autres dispositifs électroniques (50a, 50b) ; ou
procédé selon une quelconque revendication de procédé précédente, dans lequel chaque ensemble pylône (18a, 18b) loge en outre un(e) ou plusieurs armes, missiles, dispositifs de ciblage, lasers, dispositifs de contre-mesure, dispositifs de surveillance, dispositifs de détection, capteurs, drones déployables ou autres dispositifs électroniques (50a, 50b).
